# DEMANDE DE BREVET EUROPEEN

(11) **EP 1 604 849 A1**
(43) Date de publication de la demande: **14.12.2005**
(21) Numéro de dépôt: 05300458.6
(22) Date de dépôt: 07.06.2005
(51) Int. Cl.: B60H 1/00

(54) **Dispositif de regulation de la temperature d'un habitacle automobile**

(30) Priorité: 07.06.2004 FR 0406125
(71) Demandeur: Renault s.a.s., 92100 Boulogne Billancourt (FR)
(72) Inventeur: L'Huillier, Jean-Marie, 92130, Issy les Moulineaux (FR); Daniel, Yves, 92500, Rueil Malmaison (FR)

(57) **Abrégé**

Un dispositif de régulation de la température d'un habitacle de véhicule automobile comprend au moins deux ensembles 2, 3, 4 de régulation conçus pour réaliser une régulation indépendante de température dans un nombre X de zones distinctes de l'habitacle, chaque ensemble étant associé à une zone de l'habitacle et comprenant au moins un élément mobile 9, 18, 26 destiné à être déplacé indépendamment. Le dispositif comprend un nombre Y de modules de réglage 5, 14, 22 de la température d'un flux d'air destiné à être pulsé dans une zone de l'habitacle pourvus d'un élément mobile 9, 18, 26, au moins deux modules de réglage 5, 14, 22 étant distants entre eux, le nombre X de zones distinctes de l'habitacle étant inférieur au nombre Y de modules de réglage 5, 14, 22.

## Description

La présente invention concerne le domaine de la régulation de la température de l'habitacle des véhicules automobiles, et en particulier un dispositif permettant de réaliser une telle régulation.

Les véhicules automobiles comprennent de plus en plus des systèmes de régulation de la température de l'habitacle, notamment du type climatisation. Les constructeurs, soucieux d'augmenter l'agrément offert par de tels systèmes, proposent notamment des systèmes « multi-zones » permettant de maintenir une température différente dans différentes zones de l'habitacle. De tels systèmes entraînent cependant un surcoût car il est en général nécessaire de prévoir des moyens d'aération spécifique pour chaque zone, des capteurs de température spécifiques pour chaque zone, des moyens de commandes du type actionneurs spécifiques pour chaque zone, et une unité de commande adaptée pour la régulation indépendante des différents ensembles. Le coût global du véhicule est ainsi augmenté.

Il est souhaitable pour un constructeur de pouvoir proposer des véhicules à des prix différents et comprenant une offre de climatisation différente en fonction du prix. Toutefois, il est aussi coûteux pour le constructeur en termes de développement d'avoir à concevoir différents systèmes de régulation pour différentes gammes d'un même modèle de véhicule.

Le document EP-A-1 323 555 décrit un dispositif de climatisation pour véhicule automobile, comprenant un ensemble de traitement de l'air admis pourvu d'une chambre de mélange cloisonnée, des conduites avants et arrière de sortie d'air traité permettant de maintenir respectivement, à l'avant et à l'arrière du véhicule automobile, des températures prédéterminées, ladite conduite arrière étant alimentée en air par une conduite spécifique dérivée sur une des conduites avants.

Un tel dispositif présente l'inconvénient de nécessiter des conduites spécifiques supplémentaires, notamment pour réaliser le traitement d'une zone située à l'arrière du véhicule automobile, engendrant un surcoût de fabrication et de conception.

La présente invention a donc pour objet de remédier à ces inconvénients en proposant un dispositif de régulation de la température d'un habitacle de véhicule automobile qui permette de proposer des prestations variables, sans générer de surcoût de fabrication et de conception.

Un tel dispositif de régulation de la température d'un habitacle de véhicule automobile comprend au moins deux ensembles de régulation conçus pour réaliser une régulation indépendante de température dans un nombre X de zones distinctes de l'habitacle, chaque ensemble étant associé à une zone de l'habitacle et comprenant au moins un élément mobile destiné à être déplacé indépendamment. Le dispositif comprend un nombre Y de modules de réglage de la température d'un flux d'air destiné à être pulsé dans une zone de l'habitacle pourvus d'un élément mobile au moins deux modules de réglage étant distants entre eux, le nombre X de zones distinctes de l'habitacle étant inférieur au nombre Y de modules de réglage.

Ainsi, on obtient à partir d'un dispositif adapté pour la régulation indépendante de température dans au moins deux zones distinctes, un dispositif aux prestations moindres, dans lequel la régulation de température dans lesdites deux zones est liée.

Pour un même dispositif comprenant un nombre Y de modules de réglage, on peut, dans un véhicule haute gamme, disposer un nombre X de zones, X étant ici égal à Y, chaque zone ayant une température propre et, dans un véhicule moins richement équipé, disposer un nombre X de zones, X étant ici inférieur à Y. Il n'est donc pas nécessaire de prévoir un dispositif spécifique et des conduits spécifiques pour les véhicules équipés différents, seule la commande des éléments mobiles étant spécifique.

Pour un appareil avec un nombre X de zones et un nombre Y de modules, X étant égal à Y, il n'est pas nécessaire de prévoir des conduits spécifiques. Les modules sont placés dans l'appareil de climatisation, au plus près des zones, pour économiser le volume nécessaire aux branchements des conduits sur l'appareil pour chacune des zones.

Le dispositif selon l'invention est donc plus compact, même s'il y a plusieurs modules, dont des modules distants ou non limitrophes.

De préférence, un ensemble de régulation est un module de réglage de la température d'un flux d'air destiné à être pulsé dans une zone de l'habitacle, l'élément mobile constituant un organe de réglage de ladite température.

Dans un mode de réalisation, lesdits au moins deux ensembles de régulation se présentent sous la forme de mélangeurs comprenant chacun des entrées d'air, au moins une sortie d'air, un élément mobile se présentant sous la forme d'un volet répartiteur d'air disposé entre les entrées et la sortie, les volets répartiteurs desdits au moins deux ensembles étant liés mécaniquement. Ainsi, les deux mélangeurs sont commandés de façon simplifiée, de sorte que le dispositif de régulation dans son ensemble s'en trouve simplifié.

Les volets répartiteurs desdits au moins deux ensembles peuvent être liés mécaniquement par exemple par une liaison souple, notamment un câble, des engrenages, une courroie, ou une chaîne.

Dans un mode de réalisation, les éléments mobiles de deux ensembles de régulation sont liés mécaniquement, ce qui permet de passer d'un dispositif de régulation à n zones à un dispositif de régulation à n-1 zones. Le dispositif de régulation peut notamment comprendre au moins trois ensembles de régulation adaptés pour une régulation indépendante de température dans trois zones différentes de l'habitacle, deux ensembles étant couplés pour obtenir un dispositif de régulation dans deux zones différentes de l'habitacle. En particulier, on peut passer d'un dispositif de régulation à 3 zones (tri-zones), typiquement une zone de conducteur, une zone de passager avant et une zone de passagers arrière, à un dispositif de régulation à 2 zones (bi-zones), par exemple une zone conducteur, et une zone de passagers avant et arrière.

Avantageusement, le dispositif de régulation de la température d'un habitacle de véhicule automobile comprend au moins deux ensembles de régulation conçus pour réaliser une régulation indépendante de température dans un nombre X de zones distinctes de l'habitacle, chaque ensemble étant associé à une zone de l'habitacle et comprenant au moins un élément mobile destiné à être déplacé indépendamment. Le dispositif comprend un nombre Y de modules de réglage de la température d'un flux d'air destiné à être pulsé dans une zone de l'habitacle pourvus d'un élément mobile, au moins deux modules de réglage étant distants entre eux. Dans une première configuration d'utilisation, le nombre X de zones distinctes de l'habitacle est inférieur au nombre Y de modules de réglage. Dans une deuxième configuration d'utilisation, le nombre X de zones distinctes de l'habitacle est inférieur au nombre Y de modules de réglage.

Avantageusement, le dispositif comporte deux ensembles de régulation se présentant sous la forme de mélangeurs comprenant chacun des entrées d'air, au moins une sortie d'air un élément mobile se présentant sous la forme d'un volet répartiteur d'air disposé entre les entrées et la sortie. Dans la première configuration d'utilisation, les réglages des volets répartiteurs desdits au moins deux ensembles sont liés, les volets répartiteurs desdits au moins deux ensembles étant liés mécaniquement. Dans la deuxième configuration d'utilisation, les réglages des volets répartiteurs desdits au moins deux ensembles sont indépendants, les volets répartiteurs desdits au moins deux ensembles étant liés chacun à un actionneur piloté indépendamment.

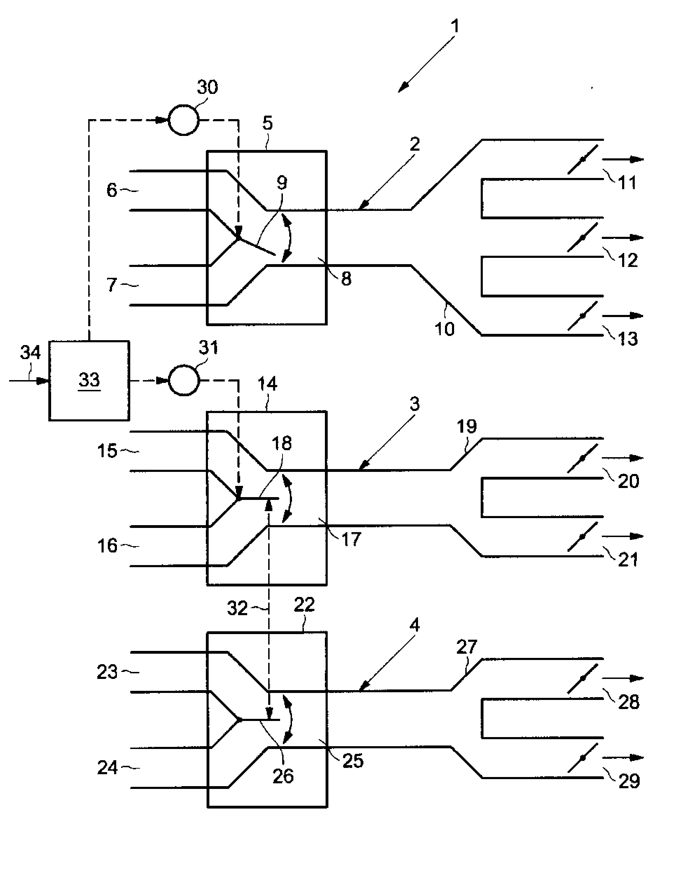

La présente invention et ses avantages seront mieux compris à l'étude de la description détaillée d'un mode de réalisation pris à titre d'exemple nullement limitatif et illustrée par la figure annexée représentant de façon schématique un dispositif de régulation de la température d'un habitacle de véhicule automobile conforme à l'invention.

Le dispositif de régulation, référencé 1 dans son ensemble, est adapté pour pulser des flux d'air chacun à des températures déterminées dans trois zones différentes. Le dispositif de régulation comprend à cet effet trois unités 2, 3, 4 comprenant des conduites débouchant sur des aérateurs répartis dans les zones de l'habitacle à réguler.

Une première unité 2 ou ensemble de régulation comprend un premier module mélangeur 5 comportant une entrée d'air chaud 6, une entrée d'air froid 7, une sortie 8, et un premier volet mobile 9 disposé entre les entrée d'air chaud 6 et d'air froid 7 et la sortie 8. La sortie 8 est reliée à un premier distributeur 10 à une entrée et une pluralité de sorties, ici trois sorties, chaque sortie débouchant sur un aérateur 11, 12, 13.

Une seconde unité 3 comprend un second module mélangeur 14 comportant une entrée d'air chaud 15, une entrée d'air froid 16, une sortie 17, et un second volet mobile 18 disposé entre les entrée d'air chaud 15 et d'air froid 16 et la sortie 17. La sortie 17 est reliée à un second distributeur 19 à une entrée et une pluralité de sorties, ici deux sorties, chaque sortie débouchant sur un aérateur 20, 21.

Une troisième unité 4 comprend un troisième module mélangeur 22 comportant une entrée d'air chaud 23, une entrée d'air froid 24, une sortie 25, et un troisième volet mobile 26 disposé entre les entrée d'air chaud 24 et d'air froid 25 et la sortie 26. La sortie 26 est reliée à un troisième distributeur 27 à une entrée et une pluralité de sorties, ici deux sorties, chaque sortie débouchant sur un aérateur 28, 29.

Les entrées d'air chaud 6, 15, 23 des mélangeurs 5, 14, 22 peuvent être reliées de façon connue en soi à une même source d'air chaud (non représentée). Les entrées d'air froid 7, 16, 24 des mélangeurs 5, 14, 22 peuvent être reliées de façon connue en soi à une même source d'air froid (non représentée). Les volets mobiles 9, 18, 26 des mélangeurs 5, 14, 22 permettent de réguler les débits d'air froid et d'air chaud pénétrant dans le mélangeur, de façon à obtenir en sortie de l'air à une température déterminée.

Le dispositif de régulation 1 comprend des moyens d'actionnement 30, 31 apte à déplacer les volets mobiles 9, 18, 26. Les moyens d'actionnement comprennent ici un premier actionneur 30, par exemple un moteur électrique, pouvant agir sur le premier volet 9 pour le déplacer en rotation, et un second actionneur 31, par exemple un moteur électrique, pouvant agir sur le second volet 18. Par aillcurs, le second volet 18 et le troisième volet 26 sont liés mécaniquement, comme illustré par la flèche 32, de façon qu'un déplacement du second volet 18 entraîne un déplacement correspondant du troisième volet 26. Du fait de la liaison mécanique, qui prend la forme de moyens de renvoi mécaniques, le déplacement des second et troisième volets 18, 26 peut être effectué à l'aide d'un unique actionneur agissant sur le second volet 18.

Le second volet 18 et le troisième volet 26 peuvent être reliés mécaniquement par exemple par des engrenages, une courroie, une chaîne, ou un câble.

Une unité de commande 33 est connectée aux actionneurs 30, 31. L'unité de commande peut être reliée de façon non représentée à des moyens de contrôle, comprenant par exemple des capteurs de températures situés dans les différentes zones de l'habitacle à réguler en température, ainsi qu'à une interface du type tableau de commande, permettant à un utilisateur d'indiquer une température souhaitée dans une zone déterminée, comme illustré par la flèche 34.

En fonctionnement, de l'air chaud et/ou de l'air froid sont produits par les sources d'air chaud et d'air froid (non représentées). Les flux d'air chaud et d'air froid sont envoyés vers les entrées d'air chaud ou d'air froid des mélangeurs 5, 14, 22. L'unité de commande 33 commande d'une part sur le premier actionneur 30 afin d'agir sur le premier volet 9 pour former au niveau de la sortie 8 un flux d'air à une température déterminée pour maintenir la température souhaitée dans la zone où débouchent les aérateurs 11, 12, 13. L'unité de commande 33 commande d'autre part le second actionneur 31 de façon à déplacer les second et troisième volets 18, 26, pour obtenir au niveau des sorties 17, 25 de l'air à une température déterminée pour maintenir l'air à une température souhaitée dans des secondes et troisièmes zones dans lesquelles débouchent les aérateurs 20, 21, 28,29.

Ainsi, on peut réguler de façon indépendante la température de l'air d'un côté dans la première zone, et de l'autre côté dans les seconde et troisième zones. On obtient une régulation indépendante dans deux zones.

Lorsque l'on souhaite obtenir une régulation indépendante dans trois zones, on peut prévoir un troisième actionneur piloté indépendamment par l'unité de commande 33, qui pourra être adaptée en conséquence, soit en étant changée, soit par le chargement d'un programme d'ordinateur adapté, dans le cas d'une unité de commande comprenant un microprocesseur et des moyens mémoire. On obtient une régulation indépendante de température d'air dans les première, seconde et troisième zones.

La première zone peut correspondre à une zone de conducteur, avec un aérateur 11 de dégivrage, un aérateur 12 de pied, et un aérateur supérieur 13. La seconde zone peut correspondre à une zone de passager avant, avec un aérateur de pied 20 et un aérateur supérieur 21. La troisième zone peut correspondre à une zone de passagers arrières, avec un aérateur de pied 28, et un aérateur supérieur 29.

Grâce à l'invention, on obtient un dispositif de régulation de la température d'un habitacle permettant de proposer des prestations variables, en offrant la possibilité de réaliser une régulation indépendante de température dans un nombre variable de zones, à l'aide d'adaptation simples ne nécessitant pas des modifications dans la conception du dispositif.

De préférence, le dispositif est conçu principalement pour la régulation dans un grand nombre de zones de l'habitacle. Ainsi, le passage d'une configuration avec un nombre de zones réduites à une configuration avec un nombre de zone plus important se fait simplement sans qu'il soit nécessaire de revoir la conception du dispositif.

Avantageusement, selon l'invention, le dispositif de régulation de la température d'un habitacle de véhicule automobile comprend au moins deux ensembles 2, 3, 4 de régulation conçus pour réaliser une régulation indépendante de température dans un nombre X de zones distinctes de l'habitacle, chaque ensemble étant associé à une zone de l'habitacle et comprenant au moins un élément mobile 9, 18, 26 destiné à être déplacé indépendamment. Le dispositif comprend un nombre Y de modules de réglage 5, 14 , 22 de la température d'un flux d'air destiné à être pulsé dans une zone de l'habitacle pourvus d'un élément mobile 9, 18, 26, au moins deux modules de réglage 5, 14, 22 étant distants entre eux. Dans une première configuration d'utilisation, le nombre X de zones distinctes de l'habitacle est inférieur au nombre Y de modules de réglage 5, 14, 22. Dans une deuxième configuration d'utilisation, le nombre X de zones distinctes de l'habitacle est inférieur au nombre Y de modules de réglage 5, 14, 22.

Avantageusement, selon l'invention, le dispositif comporte deux ensembles de régulation se présentant sous la forme de mélangeurs comprenant chacun des entrées d'air 6, 7, 15, 16, 23, 24, au moins une sortie d'air 8, 17, 25, un élément mobile 9, 18, 26 se présentant sous la forme d'un volet répartiteur d'air disposé entre les entrées et la sortie. Dans la première configuration d'utilisation, les réglages des volets répartiteurs 18, 25 desdits au moins deux ensembles 14, 22 sont liés, les volets répartiteurs 18, 25 desdits au moins deux ensembles 14, 22 étant liés mécaniquement. Dans la deuxième configuration d'utilisation, les réglages des volets répartiteurs 18, 25 desdits au moins deux ensembles 14, 22 sont indépendants, les volets répartiteurs 18, 25 desdits au moins deux ensembles 14, 22 étant liés chacun à un actionneur piloté indépendamment.

## Revendications

1. Dispositif de régulation de la température d'un habitacle de véhicule automobile comprenant au moins deux ensembles (2, 3, 4) de régulation conçus pour réaliser une régulation indépendante de température dans un nombre X de zones distinctes de l'habitacle, chaque ensemble étant associé à une zone de l'habitacle et comprenant au moins un élément mobile (9, 18, 26) destiné à être déplacé indépendamment, **caractérisé en ce que** le dispositif comprend un nombre Y de modules de réglage (5, 14 , 22) de la température d'un flux d'air destiné à être pulsé dans une zone de l'habitacle pourvus d'un élément mobile (9, 18, 26), au moins deux modules de réglage (5, 14, 22) étant distants entre eux, le nombre X de zones distinctes de l'habitacle étant inférieur au nombre Y de modules de réglage (5, 14 , 22).

2. Dispositif selon la revendication 1, **caractérisé en ce qu'**un ensemble de régulation est un module de réglage (5, 14, 22) de la température d'un flux d'air destiné à être pulsé dans une zone de l'habitacle, l'élément mobile (9, 18, 26) constituant un organe de réglage de ladite température.

3. Dispositif selon l'une des revendications 1 ou 2, **caractérisé en ce que** lesdits au moins deux ensembles de régulation se présentent sous la forme de mélangeurs comprenant chacun des entrées d'air (6, 7, 15, 16, 23, 24), au moins une sortie d'air (8, 17, 25), un élément mobile (9, 18, 26) se présentant sous la forme d'un volet répartiteur d'air disposé entre les entrées et la sortie et, les volets répartiteurs (18, 25) desdits au moins deux ensembles (14, 22) étant liés mécaniquement (32).

4. Dispositif selon la revendication 3, **caractérisé en ce que** les volets répartiteurs (18, 25) desdits au moins deux ensembles sont liés mécaniquement par une liaison souple, un câble, des engrenages, une courroie, ou une chaîne.

5. Dispositif selon l'une des revendications précédentes, **caractérisé en ce que** les éléments mobiles (18, 25) de deux ensembles de régulation sont liés mécaniquement.

6. Dispositif selon l'une des revendications précédentes, **caractérisé en ce que** le dispositif de régulation comprend au moins trois ensembles de régulation (5, 14, 22) adaptés pour une régulation indépendante de température dans trois zones différentes de l'habitacle, des éléments mobiles (18, 26) de deux ensembles (14, 22) étant liés mécaniquement.

7. Dispositif de régulation de la température d'un habitacle de véhicule automobile comprenant au moins deux ensembles (2, 3, 4) de régulation conçus pour réaliser une régulation indépendante de température dans un nombre X de zones distinctes de l'habitacle, chaque ensemble étant associé à une zone de l'habitacle et comprenant au moins un élément mobile (9, 18, 26) destiné à être déplacé indépendamment, **caractérisé en ce que** le dispositif comprend un nombre Y de modules de réglage (5, 14 , 22) de la température d'un flux d'air destiné à être pulsé dans une zone de l'habitacle pourvus d'un élément mobile (9, 18, 26), au moins deux modules de réglage (5, 14, 22) étant distants entre eux, **en ce que** dans une première configuration d'utilisation, le nombre X de zones distinctes de l'habitacle est inférieur au nombre Y de modules de réglage (5, 14 , 22) et **en ce que**, dans une deuxième configuration d'utilisation, le nombre X de zones distinctes de l'habitacle est inférieur au nombre Y de modules de réglage (5, 14 , 22).

8. Dispositif selon la revendication précédente, **caractérisé en ce qu'**il comporte deux ensembles de régulation se présentant sous la forme de mélangeurs comprenant chacun des entrées d'air (6, 7, 15, 16, 23, 24), au moins une sortie d'air (8, 17, 25), un élément mobile (9, 18, 26) se présentant sous la forme d'un volet répartiteur d'air disposé entre les entrées et la sortie, **en ce que** dans la première configuration d'utilisation, les réglages des volets répartiteurs (18, 25) desdits au moins deux ensembles (14, 22) sont liés, les volets répartiteurs (18, 25) desdits au moins deux ensembles (14, 22) étant liés mécaniquement et **en ce que** dans la deuxième configuration d'utilisation, les réglages des volets répartiteurs (18, 25) desdits au moins deux ensembles (14, 22) sont indépendants, les volets répartiteurs (18, 25) desdits au moins deux ensembles (14, 22) étant liés chacun à un actionneur piloté indépendamment.
